# EUROPEAN PATENT APPLICATION

(11) **EP 2 372 897 A2**
(43) Date of publication of application: **05.10.2011**
(21) Application number: 11159187.1
(22) Date of filing: 22.03.2011
(51) Int. Cl.: H02P 4/00, H02P 9/10

(54) **Generator apparatus for a combined heat and power system, method for operating a generator apparatus and combined heat and power system**

(30) Priority: 24.03.2010 GB 1004935
(71) Applicant: Robert Bosch GmbH, 70442 Stuttgart (DE)
(72) Inventor: Collins, Tom, Worcester, WR3 8XA (GB)

(57) **Abstract**

The invention relates to a generator apparatus (100) for a combined heat and power system, a combined heat and power system and a method for operating a generator apparatus (100) of a combined heat and power system.

It is the object of the invention to provide a generator apparatus (100) for a combined heat and power system, a combined heat and power system and a method for operating a generator apparatus (100) of a combined heat and power system in which an optimal and efficient operating mode is ensured even under varying ambient conditions.

The generator apparatus is characterised in that a converter device (10) is connected between the generator and the regulating device (2) in order to efficiently operate the generator apparatus (100) at different powers.

## Description

The invention relates to a generator apparatus for a combined heat and power system.

The invention further relates to a combined heat and power system.

In addition, the invention relates to a method for operating a generator apparatus of a combined heat and power system.

Generators and combined heat and power systems as well as methods for operating these are known from the prior art. The known solutions in particular use Stirling engines having the working piston coupled to a generator which converts the mechanical energy produced during operation of the Stirling engine into electrical energy. Such solutions are designed for an optimal operating point. If the conditions vary, no adaptation is made to the changed conditions and the known solutions no longer work optimally.

It is the object of the invention to provide a generator apparatus for a combined heat and power system, a combined heat and power system and a method for operating a generator apparatus of a combined heat and power system in which an optimal and efficient operating mode is ensured even under varying ambient conditions and/or at different powers.

According to the invention, this is achieved by the subject matters having the features of patent claim 1, patent claim 6 and patent claim 7. Advantageous further developments can be deduced from the dependent claims.

A first aspect of the present invention provides a generator apparatus for a combined heat and power system, comprising a generator coupled to a motor, in particular to a Stirling engine, for the conversion of mechanical energy into electrical energy and a regulating device for controlling the generator and connection to a voltage network is characterised in that a converter device is connected between the generator and the regulating device in order to efficiently operate and/or maintain optimised performance of the generator apparatus under varying ambient conditions such as different powers and/or voltages.

In an advantageous embodiment of the present invention, it is provided that the converter device is configured as a voltage converter which allows connection to different voltage networks and/or to voltage networks (3) being subject to transient voltage changes.

In another advantageous embodiment of the present invention, it is provided that the converter device has a switch by which means an adaptation to different voltage networks and/or to voltage networks (3) being subject to transient voltage changes can be switched.

In particular, a further embodiment of the present invention provides that the switch is configured as an incremental switch to effect an incremental switching.

Yet another embodiment of the present invention provides that the converter device comprises a coil with windings as well as a plurality of connection points to the windings which can be coupled to the generator and/or the regulating device in a selectable manner by means of the switch.

A second aspect of the present invention provides a combined heat and power system according to the invention, comprising a generator unit coupled to a motor for conversion of mechanical energy into electrical energy, characterised in that the generator unit is configured as a generator device according to the first aspect of the invention.

A third aspect of the present invention provides a method according to the invention for operating a generator apparatus of a combined heat and power system, comprising the step of converting mechanical energy into electrical energy by means of a generator coupled to a motor, wherein the generator is controlled by means of a regulating device and is connected a voltage network, is characterised in that the electrical energy is converted by means of a converter device between generator and regulating device in order to effect efficient generation of electrical energy and/or maximise generated electrical output.

In a preferred embodiment of the present invention, it is provided that the conversion is carried out as a function of a voltage of the coupled voltage network and/or voltage of the generator and/or generator power.

In a further preferred embodiment of the present invention, it is provided that the conversion is carried out as a function of the heat input to or electrical power output of the engine.

In yet another preferred embodiment of the present invention, it is provided that the conversion is carried out in a switchable manner, in particular in an incrementally switchable manner.

The following advantages are achieved in particular with the generator apparatus according to the invention, the combined heat and power system according to the invention and the method according to the invention:
With the converter device it is possible to optimally operate a motor with generator which can in each case only be designed for a specified optimal operating point even under varying conditions. If the generator is designed, for example, for 230 V, this would no longer operate optimally in the event of deviations from 230 V, for example, at 220 V or at 260 V without a converter device. By means of the converter, an automatic adaptation to different voltage networks and/or to voltage networks (3) being subject to transient voltage changes is possible. Similarly, by means of the converter, an automatic adaptation to varying network voltage over time is possible. A variation or deviation from the optimal operating point is identified by the generator apparatus according to the invention. The generator apparatus can be switched manually or automatically so that it always operates optimally adapted to the changed ambient conditions. In this way, a continuous optimization of an engine power is achieved. In addition, the generator apparatus operates stably and is less susceptible to external factors such as an applied voltage. In addition complete monitoring and control of the power quality and the mains connection is ensured. Furthermore, the generator apparatus is simply constructed and furnishes high powers without expensive electronics. In addition, existing generator systems can easily be retrofitted. By means of the converter device, the generator apparatus can be operated independently of variations in the connected voltage network.

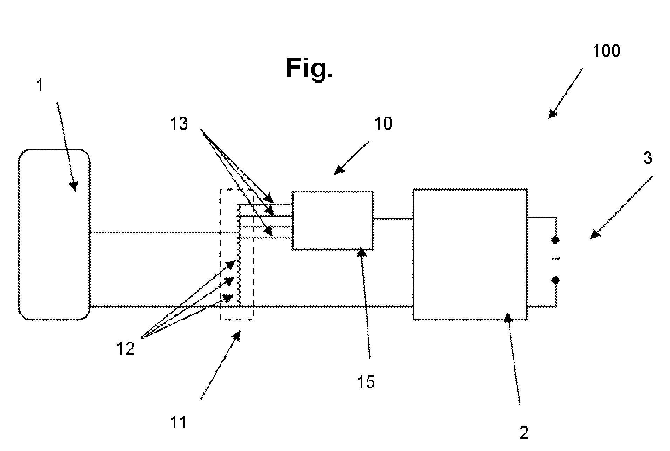

The drawing shows an exemplary embodiment of the invention and shows in the Figure:
a section of a generator apparatus 100 according to the invention shown schematically as a circuit diagram.

The figure shows schematically a section of the generator apparatus 100 according to the invention as a circuit diagram. The generator apparatus according to the figure comprises a motor 1, which is preferably configured as a Stirling engine or the like. The motor comprises at least one alternating working piston which produces mechanical energy in the form of a movement during corresponding operation, for example, during combustion of a fuel. Coupled to the motor 1 is a generator not shown here which converts the mechanical energy into electrical energy. For the conversion the generator is designed for an optimal operating point, for example, for a voltage of 230 V. A regulating device 2 configured as a motor control and voltage network connection is provided for generating electrical energy via the generator. The motor is driven via the motor control so that this generates energy. The generated energy is fed into a voltage network 3. Other than in the prior art, in the invention according to the figure, a converter device 10 is connected between motor 1 and motor control 2 so that the generated energy is not coupled directly into the voltage network 3. If other mains parameters are available, as for example, elsewhere in Europe, an adaptation to the changed relationships is provided by means of the converter device 10 so that the motor 1 continues to operate at the optimal operating point. For this purpose, the converter device 10 comprises, inter alia, a coil 11 with a plurality of windings 12. Furthermore, a plurality of connection points 13 to the windings is provided which can be coupled to the generator and/or the regulating device 2 selectively by means of a switch 15. Various voltage relationships can be set by means of this plurality of connection points 13 which can each be adapted to the applied voltage network 3. The switching can take place manually or automatically, wherein in the case of automatic switching, detection is provided to identify relationships deviating from an optimal operating point. The switch 15 shown is configured as an incremental switch in order to effect an incremental switching.

The generator apparatus 100 shown in the figure can preferably be used in combined heat and power systems and here in particular in so-called micro-combined heat and power systems. As a result of the generator apparatus, such systems can be designed to be small without any loss of power taking place. In particular, micro-combined heat and power systems are used in many different countries having different voltage networks. In such uses an automatic adaptation to different voltage should be provided for ease of operation. Finally, the performance of micro-combined heat and power appliances can be sensitive to variations in network voltage and operating power. As such an automatic adaptation to different voltage or power should be provided to optimise performance of the unit in relation to efficiency and power output.

## Claims

1. Generator apparatus (100) for a combined heat and power system, comprising a generator coupled to a motor (1) for the conversion of mechanical energy into electrical energy and a regulating device (2) for controlling the generator and connection to a voltage network (3), **characterised in that** a converter device (10) is connected between the generator and the regulating device (2) in order to efficiently operate and/or maintain optimised performance of the generator apparatus (100) at different powers and/or voltages.

2. The generator apparatus (100) according to claim 1, **characterised in that** the converter device (10) is configured as a voltage converter which allows connection to different voltage networks (3) and/or to voltage networks (3) being subject to transient voltage changes.

3. The generator apparatus (100) according to claim 1 or 2, **characterised in that** the converter device has a switch (15) by which means an adaptation to different voltage networks (3) and/or to voltage networks (3) being subject to transient voltage changes can be switched.

4. The generator apparatus (100) according to any one of the preceding claims 1 to 3 **characterised in that** the switch (15) is configured as an incremental switch to effect an incremental switching.

5. The generator apparatus (100) according to any one of the preceding claims 1 to 4, **characterised in that** the converter device (10) comprises a coil (11) with windings (12) as well as a plurality of connection points (13) to the windings (12) which can be coupled to the generator and/or the regulating device (2) in a selectable manner by means of the switch (15).

6. A combined heat and power system comprising a generator unit coupled to a motor (1) for conversion of mechanical energy into electrical energy, **characterised in that** the generator unit is configured as a generator device (100) according to any one of the preceding claims 1 to 5.

7. A method for operating a generator apparatus (100) of a combined heat and power system, comprising the step of converting mechanical energy into electrical energy by means of a generator coupled to a motor (1), wherein the generator is controlled by means of a regulating device (2) and is connected to a voltage network (3), **characterised in that** the electrical energy is converted by means of a converter device (10) between generator and regulating device (10) in order to effect efficient generation of electrical energy and/or maximise generated electrical output.

8. The method according to claim 7, **characterised in that** the conversion is carried out as a function of a voltage of the coupled voltage network (3) and/or voltage of the generator and/or generator power.

9. The method according to any one of the preceding claims 7 to 9, **characterised in that** the conversion is carried out as a function of the heat input to or electrical power output of the engine.

10. The method according to claim 7 or 8, **characterised in that** the conversion is carried out in a switchable manner, in particular in an incrementally switchable manner.
